Europäisches Patentamt

European Patent Office

Office européen des brevets

(19)

(11) Publication number: **0 115 343**
**B1**

(12) **EUROPEAN PATENT SPECIFICATION**

(45) Date of publication of patent specification: 13.04.88

(51) Int. Cl.⁴: **B 65 H 16/02** // G03B21/11, G11B15/66

(21) Application number: 84100831.1

(22) Date of filing: 26.01.84

(54) Apparatus for driving tapes.

(30) Priority: 28.01.83 JP 12350/83

(43) Date of publication of application:
08.08.84 Bulletin 84/32

(45) Publication of the grant of the patent:
13.04.88 Bulletin 88/15

(84) Designated Contracting States:
AT DE GB NL SE

(56) References cited:
DE-C- 494 881
FR-A-1 220 836
US-A-2 336 496

PATENTS ABSTRACTS OF JAPAN, vol. 5, no.
185 (P-91) (857), November 25, 1981

(73) Proprietor: ADVANCED TECHNOLOGY
BUSINESS CREATION, INC.
6-5, Ohtenma-cho Nihonbashi
Chuo-ku Tokyo (JP)

(72) Inventor: Futagawa, Toshinobu
5-21-2-503, Higashigotanda
Shinagawa-ku Tokyo (JP)

(74) Representative: Henkel, Feiler, Hänzel & Partner
Möhlstrasse 37
D-8000 München 80 (DE)

Courier Press, Leamington Spa, England.

## Description

The present invention relates to an apparatus according to the first portion of claim 1 for selectively driving tapes to select a desired tape among a plurality of tapes on which a plurality of items, information and the like (generically, referred to as "item" or "items" in the specification and claims) are recorded or stored and to position one or more items recorded on the selected tape in a predetermined station.

Since the tape driving apparatus according to the present invention can drive or move any kind of tapes, the present invention is applicable to tape driving apparatuses for multi-purpose codeless input equipments used in office computers, personal computers, word-processors, Japanese language typewriters, multi-item switches, handy input machines and the like, or magnetic recording systems used in computer files, video files and the like, or microfilm readers or the like. Accordingly, the present invention will be explained by way of an example of the multi-purpose codeless input machine.

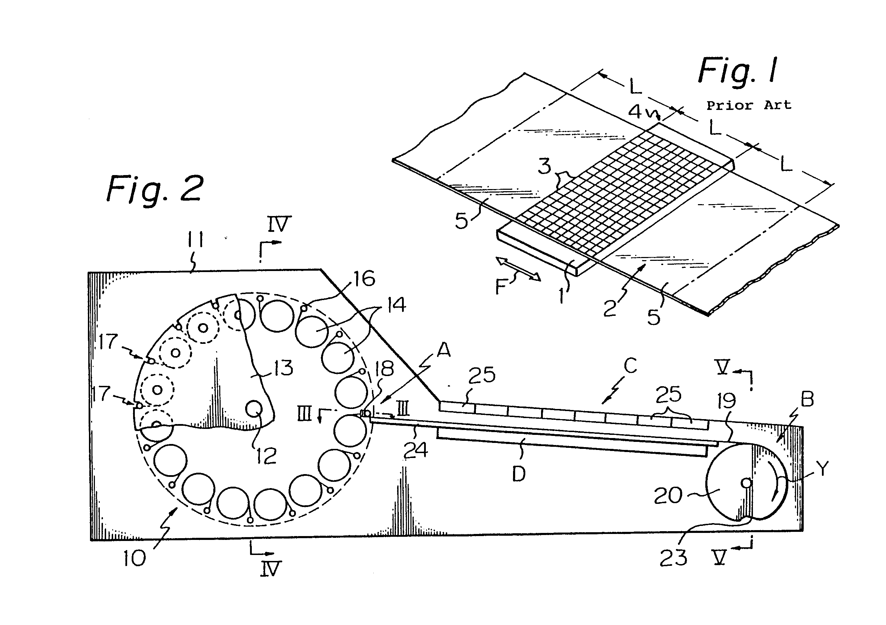

A conventional codeless input machine 4 (Fig. 1) comprises an input unit 1 and a film 2 on which a number of items 3 are recorded in matrix pattern. Each item recorded on the film corresponds to a respective information to be inputted. All of the items recorded on the film are grouped into a plurality of pages 5 having a lengthwise dimension $L$ equal to that of the input unit, a transverse dimension of each page corresponding to the width of the film. In order to position a desired item 3 on the input unit 1 for inputting the information corresponding to the desired item, the film 2 can be moved by means of an appropriate film feeding device (not shown) incorporated into the input machine in both directions indicated by an arrow $F$ such that the page 5 including the desired item 3 is aligned with the input unit 1. When the desired item 3 is energized by a pen-touch or key-push operation, a corresponding input signal is generated; said input signal selecting or designating a corresponding address among a plurality of addresses stored in a memory (not shown) through the medium of a control portion (not shown) in the input unit 1, thereby generating an output signal regarding the information corresponding to the desired item. When a new item to be inputted next is not included in the present page, the film must be moved to position a new page including said new item on the input unit 1.

In this conventional input machine, since the movement of the film is effected per "page", when the lengthwise dimension of the page is $L$ and the moving speed of the film is $V$, it takes at least a time of $L/V$ for changing a page from one to the next one. Particularly, if the first page is changed to the last page, when the total number of pages is $N$, it takes a long time of $L/V$ $(N - 1)$. Accordingly, this conventional input machine has a disadvantage of time consumption for changing pages with the result that efficiency of inputting operation is reduced.

By increasing the moving speed of the film, the above drawback of the conventional input machine can be more or less eliminated. However, in this case, there exists another drawback that it is difficult to accurately stop a desired page of the film in a predetermined position on the input unit.

The patent DE—C—494881 discloses a map holder for motor cars showing the precharacterizing features of claim 1. This known apparatus includes a drum having a plurality of rollers mounted thereon in circular disposition, each roller having a separate map sheet wound thereon. For drawing out a desired map sheet, a single gripper is provided which can be engaged with a recess at the end of the map sheet. Therefore, when the map or tape is taken out from the roller, the tape easily produces a velocity difference at the two sides of the tape and this permits meandering of the tape. This prior art apparatus, therefore, cannot be used as the tape driving apparatus in a precision machine such as a computer. Further, in the known apparatus, the drum having a plurality of rollers can rotate in only one direction. Therefore, when it is desired to position the roller at the first station for the purpose of taking out the tape, the drum must, according to circumstances, be rotated one complete revolution. Prompt positioning of the rollers is therefore impossible.

An object of the present invention is to eliminate the above-mentioned drawbacks of the conventional input machines and to provide a tape driving apparatus capable of quickly and accurately selecting a desired tape among a plurality of tapes and positioning any portion of the selected tape in a predetermined station.

The above object is achieved according to the present invention with an apparatus as mentioned above further comprising the characterizing features of claim 1.

Fig. 1 is a partial perspective view of a conventional codeless input machine;

Fig. 2 is a schematic side view of a codeless input machine incorporating a tape driving apparatus according to an embodiment of the present invention, showing an internal construction of the machine;

Fig. 3 is a partial sectional view taken along the line III—III of Fig. 2;

Fig. 4 is a sectional view taken along the line IV—IV of Fig. 2; and

Fig. 5 is a sectional view taken along the line V—V of Fig. 2.

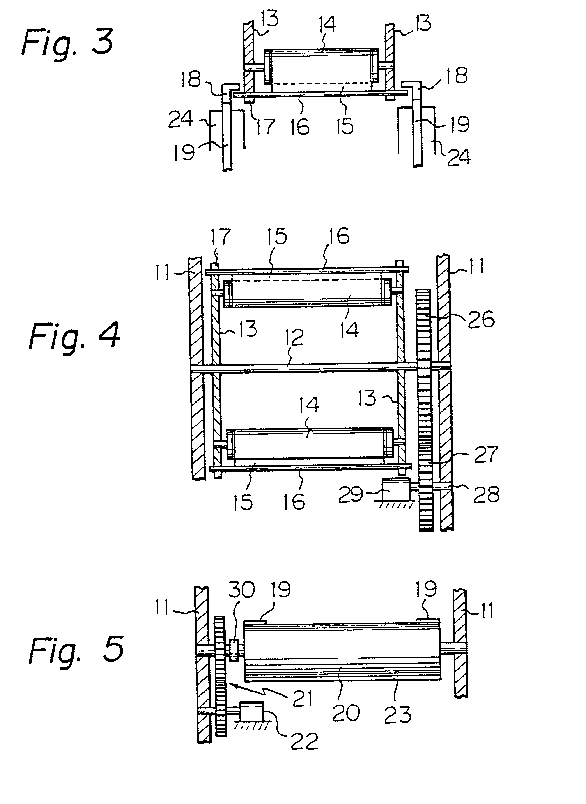

The present invention will now be described in detail with reference to the drawings showing an embodiment of the tape driving apparatus according to the invention. As shown in Figs. 2—5, a tape driving apparatus according to the present invention is incorporated into an appropriate machine such as a codeless input machine as shown in Fig. 2. The tape driving apparatus comprises a drum 10 rotatably mounted on a fixed frame 11 of the input machine. The drum 10 comprises a central shaft 12 (Fig. 4) rotatably supported by the machine frame 11, two end plates 13 fixed to the central shaft 12, and a plurality of rollers 14 extending parallel to each other and arranged in annular pattern around the central shaft 12 and mounted rotatably between the end plates 13. On each roller 14 a corresponding tape 15 on which a plurality of items are recorded is wound from its one end. The other end (i.e. free end) of each tape 15 has a transverse bar 16 attached thereto, the bar 16 having a length greater than a width of the corresponding tape 15 such that both ends of the bar 16 project laterally from the tape. The end portions of each bar 16 are normally housed into corresponding slots 17 formed on peripheral edges of the end plates 13.

A tape picking-up and drawing means is provided at a tape picking-up position (a first predetermined station) A (Fig. 2) in association with the drum 10. In an embodiment of the invention, the tape picking-up and drawing means (Fig. 3) comprises a pair of hooks or grippers 18 normally positioned backwardly and laterally of the ends of the bar 16 attached to the free end of the tape 15 wound on the roller 14 positioned at the station A, and pulling members (for example, flexible strip) 19 connected to the hooks 18. A tape arrival position or tape winding position (a second predetermined station) B situated far from the tape picking-up position A includes a second roller 20 to which the other ends of the pulling members 19 are connected at the cylindrical end portions of the second roller 20. The second roller 20 (Fig. 5) is rotatably mounted on the machine frame 11 and can be rotated by any appropriate driving means such as a gear train 21 and a stepping motor 22. Therefore, when the second roller 20 is rotated in a clockwise direction indicated by an arrow Y (Fig. 2), the pulling members 19 are wound on the second roller, thereby drawing the tape 15 in the picking-up position A toward the tape arrival position B through the medium of the hooks 18 and the corresponding bar 16 engaged by said hooks. Preferably, when the bar 16 of the tape 15 has just arrived at the second roller 20 in the arrival position B, the bar is received into a longitudinal groove 23 (Figs. 2 and 5) formed on the cylindrical surface of the second roller 20, whereby the tape can be wound on the second roller 20 without interference between the bar and the tape as the roller 20 is further rotated in the direction Y. For guiding and supporting the hooks 18 and the pulling members 19 between the stations A and B, support or guide members 24 are arranged substantially from the station A through the station B.

The input machine including the tape driving apparatus of the present invention is provided with an item indicating portion C between the tape picking-up station A and the tape arrival station B. The item indicating portion C includes, for example, a plurality of transparent switches 25 arranged in matrix pattern corresponding to the item matrix on the tape to be indicated in the indicating portion C. The input machine further includes an input unit D of the known type arranged under the item indicating portion C. The tape being moved toward the arrival station B passes on the input unit D.

Means are provided for returning the drawn tape from the tape arrival station B to the tape picking-up station A, which may be of any known type. For example, said tape returning means may comprise an auto-returning mechanism for a roller blind, incorporated into the interior of the roller 14, or may comprise any known selective driving mechanism including clutches, a gear train, electric motors and the like (not shown) arranged to cooperate with the shaft of the roller 14 which is positioned at the picking-up station A, in such a way that the roller 14 is positively rotated by said driving mechanism to wind the corresponding tape onto said roller. Further, the tape can automatically return to the station A by auto-returning characteristic of the tape itself which is achieved by any known chemical treatment.

Finally, means are provided for positioning a desired roller 14 in the tape picking-up station A by rotating the drum 10 step-by-step. For example, said positioning means may comprise a gear 26 fixed to the shaft 12 of the drum 10, a gear 27 meshed with the gear 26, and a stepping motor 29 having a drive shaft 28 on which the gear 27 is fixed.

The operation of the input machine illustrated in the drawings is as follows. At first, by depressing a key corresponding to a roller 14 desired to be positioned, selected among a group of keys arranged on a control panel (not shown), the drum 10 is rotated by a predetermined amount by means of the stepping motor 29 through a known selecting circuit (for example, including pulse counters, a comparison circuit, a coincidence circuit, pulse generators and the like), thereby positioning the desired roller 14 in the tape picking-up station A. Then, by actuating the stepping motor 22 (Fig. 5), the second roller 20 is rotated in the direction Y, with the result that the bar 16 associated with the desired or selected roller 14 is drawn up to the tape arrival station B through the hooks 18 and the pulling members 19. Thus, the tape 15 connected to the bar 16 is also drawn up to the station B. The position of the groove 23 on the second roller 20 is so selected that the bar 16 is received in the groove when the bar has just arrived at the station B. At this point, one page of item matrix including a desired item to be inputted is positioned in the indicating portion or area C. Upon depression of the switch 25 corresponding to the desired item, a control portion in the input unit D reads out an input signal stored in an address corresponding to the desired item from a memory and outputs it in a known manner. Preferably, the longer tapes each including a plurality of pages of item matrix are used so that any page (among a plurality of pages in each tape) can be positioned in the indicating area C by rotating the second roller 20 by predetermined amounts. In this way, the number of items to be handled by the input machine can be remarkably increased. In this case, since the bar is received in the groove 23 of the second roller 20, it does not interfere with the winding of the tape on the second roller.

After the inputting operation has been completed, a clutch 30 (Fig. 5) is actuated so that the second roller 20 can be freely rotated, the tape 15 is returned to the station A by the action of the above-mentioned tape returning means.

Then, a new inputting operation regarding a new item can be performed in a manner similar to the above-mentioned one.

Although the tape driving apparatus according to the present invention has been described in connection with the codeless input machine, it should be noted that the present invention is not limited to this kind of input machine; namely, the tape driving apparatus of the present invention can be applied in various uses, according to the kind of the tape (tape, film, sheet and the like). For example, when the tapes are microfilms and a film reader is provided in place of the tape indicating portion C and the input unit D, the tape driving apparatus can be used as a microfilm reading system. Further, when magnetic tapes are used and one or more magnetic heads are provided in place of the tape indicating portion and the input unit, the tape driving apparatus can be utilized as a magnetic reading system. Furthermore, when maps are printed on the tapes, the tape driving apparatus can be used as an atlas or an automatic map searching system.

The present invention is not limited to an embodiment illustrated and described above. For example, in place of the hooks and the pulling members, a carriage movable between the stations A and B and, grippers mounted on the carriage for gripping the bar 16 associated with the tape 15 may be used.

This application is, therefore, intended to cover any variations, uses, or adaptions of the invention following the general principles thereof and including such departures from the present disclosure as come within known or customary practice in the art to which this invention pertains and fall within the limits of the appended claims.

## Claims

1. Tape driving apparatus comprising:
(a) a plurality of rollers (14),
(b) each roller having a separate length of tape (15) wound thereon with one end of the tape being free,
(c) pick-up means (16) carried by the free end of each tape,
(d) a drum (10) having the plurality of rollers (14) mounted thereon in circular disposition about the drums's axis of rotation, said drum being rotatable and each roller being independently rotatable relative to the drum,
(e) selector means (26—29) for causing the drum (10) to turn whereby any of its rollers (14) can be individually brought to a predetermined position corresponding to a pick-up station (A),
(f) means associated with each roller (14) in the drum (10) for rewinding the tape (15) on the roller,
characterized in that
(g) said pick-up means (16) protrude laterally at both sides from the free end of the tape (15),
(h) a take-up roller (20) is disposed at a second station (B), the take-up roller having means (23) for engaging the laterally protruding pick-up means on the tape drawn to the second station (B),
(i) means (18, 19) connected to said pick-up roller (20) are provided for engaging said pick-up means (16) of the tape (15) on the roller (14) at the pick-up station (A) and drawing the tape through a reading zone to the second station (B), the laterally protruding pick-up means and the means with which it is engaged travelling paths (24) on either side of the reading zone,
(j) means (21, 22) associated with the take-up roller (20) is provided for causing that roller to turn and the tape to be wound on that roller,
(k) a clutch (30) is provided between the take-up roller (20) and said associated means (21, 22) for allowing that roller to rotate in the direction enabling the tape (15) to be rewound on its roller (14), and
(l) an inputting unit (D) is provided having means for reading information on the tapes in the reading zone.

2. The tape driving apparatus according to claim 1, wherein the pick-up means (16) on the free end of each tape (15) is a bar whose ends protrude laterally beyond the tape, and wherein the means for engaging those lateral protrusions (16) and drawing the tape (15) to the second station includes
(1) hooks (18) for engaging the laterally protruding ends of the bar (16) on the free end of the tape (15), and
(2) means (19) for moving the hooks (18) to the second station.

## Patentansprüche

1. Vorrichtung zum Antreiben von Streifen bzw. Bändern, umfassend
(a) eine Anzahl von Rollen (14),
(b) wobei auf jede Rolle ein getrenntes Bandstück (15) aufgewickelt ist und das eine Ende des Bands frei ist,
(c) ein vom Freien Ende jedes Bands getragenes Abnahmemitteil (16),
(d) eine Trommel (10), an welcher die mehreren Rollen (14) in kreisförmiger Anordnung um die Trommel-Drehachse herum montiert bzw. gelagert sind, wobei die Trommel drehbar und jede Rolle unabhängig gegenüber der Trommel drehbar ist.
(e) Wähleinheiten (26—29), um die Trommel (10) sich drehen zu lassen, wobei eine beliebige ihrer Rollen (14) jeweils einzeln in eine einer Abnahmestation (A) entsprechende vorbestimmte Stellung bringbar ist, (und)

(f) jeder Rolle (14) in der Trommel (10) zugeordnete Einheiten zum Wiederaufspulen des Bands (15) auf die (jeweilige) Rolle,

dadurch gekennzeichnet, daß

(g) die Abnahmemittel (16) seitlich an beiden Seiten vom freien Ende des Bands (15) überstehen,

(h) eine Aufwickelrolle (20) an einer zweiten Station (B) angeordnet ist und Mittel (23) zum Erfassen der seitlich überstehenden Abnahmemittel an dem zur zweiten Station (B) ausgezogenen Band aufweist,

(i) mit der Aufwickelrolle (20) verbundene Mittel (18, 19) zum Erfassen der Anahmemittel (16) des Bands (15) auf der Rolle (14) an der Abnahmestation (A) und zum Ausziehen des Bands durch eine Auslesezone zur zweiten Station (B) vorgesehen sind, wobei die seitlich überstehenden Abnahmemittel und die damit in Eingriff stehenden Mittel Bahnen (24) an beiden Seiten der Auslesezone durchlaufen,

(j) eine der Aufwickelrolle (20) zugeordnete Einrichtung (21, 22) vorgesehen ist, um diese Rolle sich drehen zu lassen und das Band auf diese Rolle aufzuwickeln,

(k) zwischen der Aufwickelrolle (20) und der zugeordneten Einrichtung (21, 22) eine Kupplung (30) vorgesehen ist, um diese Rolle sich in einer Richtung, in welcher das Band (15) auf seine (jeweilige) Rolle (14) rückgespult werden kann, drehen zu lassen, und

(l) eine Eingabeeinheit (D) mit Einrichtung(en) zum Auslesen von Informationen von den Bändern in der Auslesezone vorgesehen ist.

2. Vorrichtung zum Antreiben von Streifen oder Bändern nach Anspruch 1, dadurch gekennzeichnet, daß die Abnahmemittel (16) am freien Ende jedes Bands (15) jeweils ein Stab sind, dessen Enden seitlich über das Band überstehen, und daß die Mittel zum Erfassen dieser seitlichen Überstände (16) und zum Ausziehen des Bands (15) zur zweiten Station umfassen

(1) Haken (18) zum Erfassen der seitlich überstehenden Enden des Stabs (16) am freien Ende des Bands (15) und

(2) Mittel (19) zum Bewegen der Haken (18) zur zweiten Station.

**Revendications**

1. Appareil d'entraînement de bande comportant:
(a) une pluralité de rouleaux (14),
(b) une longueur séparée de bande (15) étant enroulée sur chaque rouleau et une extrémité de la bande étant libre,
(c) des moyens de prélèvement (16) portés par l'extrémité libre de chaque bande,

(d) un tambour (10) sur lequel est montée la pluralité de rouleaux (14) suivant une disposition circulaire autour de l'axe de rotation du tambour, ledit tambour pouvant tourner et chaque rouleau pouvant tourner de manière indépendante par rapport au tambour,

(e) des moyens sélecteurs (26—29) pour faire tourner le tambour (10) de manière que l'un quelconque de ses rouleaux (14) puisse être amené individuellement dans une position prédéterminée correspondant à un poste de prélèvement (A),

(f) des moyens associés à chaque rouleau (14) dans le tambour (10) pour rebobiner la bande (15) sur le rouleau,

caractérisé en ce que

(g) lesdits moyens de prélèvement (16) font saillie latéralement des deux côtés par rapport à l'extrémité libre de la bande (15),

(h) un rouleau d'enroulement (20) est disposé dans un second poste (B), le rouleau d'enroulement comportant des moyens (23) pour coopérer avec les moyens de prélèvement faisant saillie latéralement sur la bande tirée jusqu'au second poste (B),

(i) des moyens (18, 19) reliés audit rouleau d'enroulement (20) sont prévus pour coopérer avec lesdits moyens de prélèvement (16) de la bande (15) se trouvant sur le rouleau (14) au poste de prélèvement (A) et pour tirer la bande vers le second poste (B) en traversant une zone de lecture, les moyens de prélèvement faisant saillie latéralement et les moyens avec lesquels ils coopèrent se déplaçant le long de chemins (24) de chaque côté de la zone de lecture,

(j) des moyens (21, 22) associés au rouleau d'enroulement (20) sont prévus pour faire tourner ce rouleau et pour enrouler la bande sur ce rouleau,

(k) un embrayage (30) est prévu entre le rouleau d'enroulement (20) et lesdits moyens associés (21, 22) pour permettre à ce rouleau de tourner dans le sens permettant à la bande (15) d'être enroulée à nouveau sur son rouleau (14), et

(l) une unité d'entrée (D) est prévue, qui comporte des moyens pour lire les informations portées par les bandes dans la zone de lecture.

2. L'appareil d'entraînement de bande selon la revendication 1, dans lequel les moyens de prélèvement (16) à l'extrémité libre de chaque bande (15) sont constitués par une barre dont les extrémités font saillie latéralement au-delà de la bande, et dans lequel les moyens pour coopérer avec ces saillies latérales (16) et pour tirer la bande (15) jusqu'au second poste comportent

(1) des crochets (18) pour coopérer avec lex extrémités de la barre (16) faisant saillie latéralement à l'extrémité libre de la bande (15), et

(2) des moyens (19) pour déplacer les crochets (18) jusqu'au second poste.

*Fig. 1*

Prior Art

*Fig. 2*

0 115 343

*Fig. 3*

*Fig. 4*

*Fig. 5*